# EUROPÄISCHE PATENTSCHRIFT

(11) **EP 2 385 312 B1**
(45) Veröffentlichungstag und Bekanntmachung des Hinweises auf die Patenterteilung: **13.02.2019**
(21) Anmeldenummer: 11164034.8
(22) Anmeldetag: 28.04.2011
(51) Int. Cl.: F24C 7/08, G08C 17/02, H02J 5/00, H05B 6/12, H02J 50/10

(54) **SYSTEM AUFWEISEND EINE HAUSHALTSARBEITSSTATION MIT EINEM BEDIENTEIL, SOWIE VERFAHREN ZUM BETREIBEN DES SYSTEMS**
SYSTEM COMPRISING A HOUSEHOLD WORKSTATION WITH A CONTROL UNIT, AND METHOD FOR OPERATING THE SYSTEM
SYSTÈME COMPRENANT UN POSTE DE TRAVAIL MÉNAGER AVEC UN ÉLÉMENT DE COMMANDE, AINSI QUE PROCÉDÉ DE FONCTIONNEMENT DU SYSTÈME

(30) Priorität: 03.05.2010 DE 102010028508
(43) Veröffentlichungstag der Anmeldung: 09.11.2011
(73) Patentinhaber: BSH Hausgeräte GmbH, 81739 München (DE)
(72) Erfinder: Bally, Ingo, 83278, Traunstein (DE); Dinkel, Alexander, 83246, Unterwoessen (DE); Fuchs, Wolfgang, 83352, Altenmarkt a.d. Alz (DE); Leitmeyr, Claudia, 83301, Traunreut (DE); Namberger, Angelika, 83352, Altenmarkt a.d. Alz (DE); Reindl, Michael, 84137, Vilsbiburg (DE); Roch, Klemens, 83308, Trostberg (DE); Sauerbrey, Jens, 83339, Chieming (DE); Schnell, Wolfgang, 83308, Trostberg (DE); Sorg, Matthias, 83379 Wonneberg (DE); Zschau, Günter, 83374, Traunwalchen (DE)

(56) Entgegenhaltungen:
- EP-A1- 0 742 308
- EP-A1- 0 846 991
- EP-A2- 1 001 321
- WO-A1-2005/002076
- WO-A2-2008/003572
- DE-A1- 19 753 345
- DE-A1-102006 017 801
- DE-U1-202006 016 113
- US-A- 3 761 668

## Beschreibung

Die Erfindung betrifft ein System, aufweisend eine Haushaltsarbeitsstation mit mehreren transformatorisch arbeitenden Basisstationen und einem abnehmbaren Bedienteil, wobei die mehreren transformatorisch arbeitenden Basisstationen mindestens eine Leistungs-Basisstation aufweisen, welche zum Betrieb eines elektrischen Aufsatzküchengeräts vorgesehen und ausgestaltet ist. Das Verfahren dient zum Betreiben des Systems.
DE 10 2005 022 352 A1 beschreibt eine Energieübertragungsvorrichtung mit einer Primärspule zum induktiven Übertragen von elektromagnetischer Energie mit einer Energieübertragungsfrequenz auf eine lösbare Sekundärspule und mit einem Sensiermittel zum Erfassen wenigstens einer Kenngröße einer die Sekundärspule umfassenden, lösbaren Sekundärseite. Um eine Energieübertragungsvorrichtung bereitzustellen, deren Sensiermittel besonders sicher Informationen über das Vorhandensein einer lösbaren Sekundärseite erfassen kann, koppelt das Sensiermittel eine Messspannung mit einer von der Energieübertragungsfrequenz verschiedenen Messfrequenz in die Sekundärspule ein.
DE 10 2006 017 801 A1 beschreibt eine Energieversorgungseinheit, umfassend eine Primärenergieübertragungseinheit mit einem Übertragungsbereich, welche in drahtlosem Zusammenwirken mit einer im Übertragungsbereich und vom Übertragungsbereich trennbaren Sekundärenergieempfangseinheit zur Versorgung eines Energieverbrauchers mit Energie vorgesehen ist. Die Energieversorgungseinheit weist eine Erkennungseinheit auf, die dazu vorgesehen ist, ein Vorhandensein eines von der Sekundärenergieempfangseinheit unterschiedlichen Gegenstands in den Übertragungsbereich zu erkennen.
DE 103 43 011 A1 beschreibt eine Vorrichtung zum Erwärmen von Speisen mittels Induktion mit einem Bodenelement, das eine aus einem Stromleiter geformte sekundäre Wicklung und ein an die Wicklung angeschlossenes Heizelement umfasst. Die Erfindung geht außerdem aus von einer Vorrichtung zur Übertragung von Energie in eine Vorrichtung zum Erwärmen von Speisen mittels Induktion mit einer aus einem Stromleiter geformten und mit einer Spannungsquelle verbundenen primären Wicklung. Um eine geringe Bauhöhe des Bodenelements zu erreichen, ist innerhalb der Wicklung ein Wicklungskern angeordnet.

WO 2008/003572 A2 offenbart eine Bedieneinheit zur Bedienung von zumindest einem Hausgerät, welche als eine von einem Hausgerät separierbare Einheit ausgebildet ist und zumindest an zwei verschiedenen Hausgeräten anbringbar ist, wobei die Einstellung und/oder Überwachung von Betriebsparametern eines Hausgeräts unabhängig davon durchführbar ist, an welchem Hausgerät die Bedieneinheit angeordnet ist.
WO 2005/002076 A1 offenbart eine Fernbedienung zur Abgabe von Befehlen an ein fernbedienbares Gerät auf drahtlosem Weg, bei welcher vor Inbetriebnahme ein Zuordnungsmodus ablaufen kann, und mit einem Akkumulator zur Stromversorgung, wobei an dem fernbedienbaren Gerät eine Andockstelle für die Fernbedienung vorgesehen ist, an welcher die Fernbedienung vorübergehend fixierbar ist.
EP 1 001 321 A2 offenbart eine Steuerung für ein Elektrogerät mit wenigstens einer in dem Gerät enthaltenen elektrischen Funktionseinrichtung, wobei die Steuerung wenigstens eine Leistungsschalteinrichtung enthält. Die Steuerung weist eine von dem Elektrogerät separate Steuereinheit auf, welche drahtlos signalübertragend mit dem Elektrogerät verbunden ist und im Wesentlichen den Steuer- und Regelungsteil für das Elektrogerät enthält. Auf diese Weise erhält man eine von dem Elektrogerät lösbare bzw. getrennte Bedien- und Steuereinheit, die bei Bedarf ohne Aufwand als separates Teil ausgetauscht werden kann. Bevorzugt handelt es sich bei dem Elektrogerät um ein Elektrokochgerät, insbesondere ein Kochfeld. Als weiteres Merkmal kann vorgesehen sein, dass die externe Steuereinheit in einer bestimmten Position, insbesondere an dem Elektrogerät, angebracht sein muss, um eine Bedienung zu ermöglichen.
US 3 761 668 A offenbart ein Induktionskochfeld. Die zugehörigen Induktionskochstellen werden dazu verwendet, um speziell modifizierte kabellose elektrische Kleingeräte, die auf der Kochfläche angebracht sind, mit Spannung zu versorgen. In ähnlicher Weise umfasst eine Universal-Energieversorgungseinheit eine induktiv gekoppelte Empfangsspule und einen Gleichrichter mit Steckdosen für andere Geräte.

EP 0 742 308 A1 offenbart ein Haushaltgerät mit einer Anzeigevorrichtung, mit welcher Informationen, die die Restlaufzeit, das Gerät und/oder den Gerätestatus betreffen, räumlich getrennt vom Haushaltgerät darstellbar sind, wobei diese Informationen als Daten von einer vorzugsweise elektronischen Programmsteuerung des Haushaltgerätes über eine Sendeeinrichtung drahtlos an eine in der Anzeigevorrichtung angeordnete Empfangseinrichtung weitergegeben werden. Um dem Benutzer unabhängig vom Aufstellort des Geräts sicher und einfach Informationen über den Programmablauf, die Restlaufzeit des Programms und/oder Fehleranzeigen zu liefern, wird vorgeschlagen, dass die Anzeigevorrichtung eine insbesondere elektronische Anzeigesteuerung beinhaltet, mit welcher die Daten mehrerer gleichzeitig betriebener Haushaltgeräte seriell oder parallel darstellbar sind.
DE 197 53 345 A1 betrifft ein Verfahren zur Übermittlung von Programm- und Gerätedaten eines programmgesteuerten Haushaltgeräts unter Verwendung einer ersten Anzeigevorrichtung, mit der die Daten räumlich getrennt vom Haushaltgerät darstellbar sind, wobei die Daten von einem im Gerät integrierten, mit der Programmsteuerung (2; 3) über eine Datenleitung verbundenen Sender drahtlos an einen in der ersten Anzeigevorrichtung integrierten Empfänger übermittelt werden. Damit auch in großer räumlicher Entfernung Angaben über Programm- und Gerätedaten sowie über aufgetretene Fehlerzustände abgerufen werden können, wird vorgeschlagen, dass die erste Anzeigevorrichtung über eine Schnittstelle zur Übergabe der Daten mit einer Steuereinheit verbunden ist, und dass die von der ersten Anzeigevorrichtung empfangenen Daten durch die Steuereinheit nach einer Datenfernübertragung insbesondere über das Fernsprechnetz durch eine zweite Anzeigevorrichtung darstellbar sind.
EP 0 846 991 A1 betrifft eine zentrale Steuer- und Überwachungseinrichtung für Haushaltgeräte wie Waschmaschinen, Wäschetrockner, Herde, Kühlschränke oder Geschirrspülmaschinen, welche mit einer elektronischen Programmsteuerung ausgestattet sind, wobei die Haushaltgeräte untereinander und mit einem zentralen Leitrechner über eine Datenübertragungseinrichtung verbunden sind und wobei durch den Leitrechner Programm- und Gerätedaten aus den Programmsteuerungen abrufbar sind. Um eine solche Überwachungseinrichtung für Haushaltsgeräte zu schaffen, die einerseits in einem Homebus-System verbunden sind, mit der andererseits aber eine weitgehend ortsunabhängige Kon-trolle der Haushaltsgeräte ermöglicht wird, wird vorgeschlagen, dass im Leitrechner eine Sendeeinrichtung zur drahtlosen Übertragung der Daten angeordnet ist, welche mit einem Empfänger einer Anzeigevorrichtung in Funkverbindung steht.

Es ist die **Aufgabe** der vorliegenden Erfindung, eine nutzerfreundlichere Möglichkeit zur Bedienung einer transformatorisch Leistung übertragenden Haushaltsarbeitsstation bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein System, aufweisend eine Haushaltsarbeitsstation mit mehreren transformatorisch arbeitenden Basisstationen und einem abnehmbaren Bedienteil, wobei die mehreren transformatorisch arbeitenden Basisstationen mindestens eine Leistungs-Basisstation aufweisen, welche zum Betrieb eines elektrischen Aufsatzküchengeräts vorgesehen und ausgestaltet ist, wobei das Bedienteil mindestens eine Anzeigeeinheit und mindestens eine Bedieneinheit für eine Bedienung der Haushaltsarbeitsstation aufweist, das Bedienteil mindestens zu seinem Betrieb auf die Haushaltsarbeitsstation aufsetzbar ist und dadurch mit der Haushaltsarbeitsstation transformatorisch koppelbar ist, das Bedienteil mindestens eine drahtlose Datenschnittstelle zur Kommunikation mit der Haushaltsarbeitsstation aufweist, die Haushaltsarbeitsstation bedienteilfrei ist, die Haushaltsarbeitsstation mindestens eine drahtlose Datenschnittstelle zur Kommunikation mit dem abnehmbaren Bedienteil aufweist, die Haushaltsarbeitsstation mit einer Aufsatzgeräteerkennung ausgestattet ist, die mehreren transformatorisch arbeitenden Basisstationen mindestens eine Bedienteil-Basisstation aufweisen, welche zum Betrieb des aufgesetzten Bedienteils vorgesehen und ausgestaltet ist, die mindestens eine Leistungs-Basisstation nur bei einem Vorhandensein des Bedienteils auf einer Bedienteil-Basisstation aktivierbar ist, und die Haushaltsarbeitsstation mindestens einen Datenspeicher aufweist, welcher zur zumindest zeitlich begrenzten Speicherung von Daten von auf den Basisstationen aufgesetzten Aufsatzgeräten nach einer Entfernung des Bedienteils eingerichtet ist.

Dadurch, dass das Bedienteil nicht mehr fest in die Haushaltsarbeitsstation integriert ist, sondern abnehmbar gestaltet ist, kann zusätzlicher Arbeitsraum an der Haushaltsarbeitsstation, z.B. einer Arbeitsplatte, geschaffen werden. Zudem kann das Bedienteil platzsparend verstaut werden. Es können ferner Verschmutzungen und ggf. sogar Beschädigungen verhindert werden. Auch wird eine optimale Anordnung von Basisstationen auf der Kochfläche ermöglicht, da der bisher belegte Bereich für eine Bedien- und Anzeigeneinheit entfällt. Darüber hinaus kann das Bedienteil im Reparaturfall leicht ausgetauscht werden. Auch sind unterschiedliche Ausführungen in Bezug auf Größe, Design, Format, Farbe, Ausstattung, Barrierefreiheit besonders einfach verwendbar, da keine strikten Vorgaben für Außenabmessungen mehr benötigt werden. Darüber hinaus stellt die Abnehmbarkeit eine Kindersicherung dar, weil das Bedienteil an für Kinder unzugänglicher Stelle deponiert werden kann. Die Funktion des Bedienteils kann insbesondere sämtliche Funktionen umfassen, welche auch von einem in die Haushaltsarbeitsstation integrierten Bedienteil wahrgenommen werden können.

Um mit der Haushaltsarbeitsstation transformatorisch koppelbar zu sein, kann das Bedienteil insbesondere mindestens eine Empfängerspule aufweisen, mittels welcher Energie aus einem magnetischen Wechselfeld abgreifbar ist, z.B. durch Induktion. Die mindestens eine Empfängerspule kann in einen Transformatorkern integriert sein. Das magnetische Wechselfeld kann insbesondere durch die Haushaltsarbeitsstation erzeugt werden.

Unter einer Haushaltsarbeitsstation kann insbesondere jegliches im Haushalt bzw. als Haushaltsgerät verwendbare Arbeitsgerät verstanden werden, an dem ein elektrisch betreibbares Aufsatzgerät durch eine transformatorische Kopplung mit Energie versorgbar ist. Die Haushaltsarbeitsstation stellt dazu mehrere transformatorisch arbeitende Basisstationen (z.T. auch als Kochstelle bezeichnet, obwohl nicht auf einen transformatorischen Betrieb von Kochgeräten beschränkt) bereit. Die Haushaltsarbeitsstation kann z.B. als eine im Wesentlichen ebene Arbeitsplatte ausgestaltet sein oder eine solche aufweisen, in welche die Basisstationen integriert sind. Die Haushaltsarbeitsstation kann insbesondere zum Betrieb der mindestens einen Basisstation eingerichtet sein und z.B. einen Netzanschluss, eine Steuereinheit, eine Leistungselektronik usw. umfassen.

Die transformatorisch arbeitende Basisstation erzeugt insbesondere ein magnetisches Wechselfeld, welches von einem auf dieser Basisstation abgestellten elektrisch betreibbaren Aufsatzgerät abgegriffen werden kann (transformatorische Kopplung). Das Bedienteil kann dazu insbesondere mindestens eine Spule oder mindestens eine Transformatorhälfte oder Übertragerkern aufweisen, der insbesondere zum Betrieb elektronischer Bauelemente wie einer integrierten Schaltung und/oder einer Anzeigeneinheit ein Gleichrichter nachgeschaltet sein kann. Die Haushaltsarbeitsstation kann beispielsweise zum Betreiben von elektrischen Aufsatz-Küchengeräten wie elektrisch betreibbarem Kochgeschirr (Topf, Pfanne usw.) oder Haushaltskleingeräten wie einer Kaffeemaschine und/oder einem Toaster vorgesehen sein. Die Basisstation kann insbesondere in diesem Fall auch als eine Kochstelle bezeichnet werden.

Dadurch, dass die Haushaltsarbeitsstation mindestens einen Datenspeicher aufweist, welcher zur zumindest zeitlich begrenzten Speicherung von Daten von auf den Basisstationen aufgesetzten Aufsatzgeräten nach einer Entfernung des Bedienteils eingerichtet ist, wird bei zwei oder mehr zum Betrieb des Bedienteils geeigneten Basisstationen ein Umsetzen des Bedienteils von einer der Basisstationen auf eine andere der Basisstationen ohne eine Neueinstellung der Haushaltsarbeitsstation oder der Basisstationen ermöglicht. Ansonsten könnten z.B. bei einem Abnehmen des Bedienteils der Leistungsbetrieb der Basisstationen deaktiviert werden, wodurch auch aktuelle Leistungseinstellungen verloren gehen würden. Ein Benutzer müsste dann nach einem Aufsetzen des Bedienteils auf die andere Basisstation die Leistungseinstellungen erneut vornehmen. Mittels des Datenspeichers kann der Betrieb der Basisstationen mit den zuvor gültigen Informationen, z.B. bezüglich einer Leistungsstufe oder einer Verwendung und eines Stands einer Programmautomatik, weitergeführt werden.

Die Anzeigeeinheit dient zur optischen Information eines Nutzers oder Bedieners, z.B. über Zustände der Basisstationen, z.B. eingestellte Leistungsstufen oder für eine Menüsteuerung. Die Bedieneinheit dient zur Eingabe von Nutzerwünschen. Die mindestens eine Anzeigeeinheit und die mindestens eine Bedieneinheit können in einer Einheit integriert sein, z.B. in Form eines berührungsempfindlichen Bildschirms, oder voneinander getrennt in dem Bedienteil untergebracht sein.

Durch die drahtlose Datenschnittstelle wird ein Datenaustausch mit der Haushaltsarbeitsstation zum Bedienen derselben ermöglicht. Über die Datenschnittstelle können z.B. Steuerbefehle an die Haushaltsarbeitsstation gesendet werden und/oder aktuelle Daten von auf der Haushaltsarbeitsstation abgesetzten Aufsatzgeräten auf das Bedienteil übertragen werden.

Die drahtlose Schnittstelle kann z.B. die Empfängerspule nutzen. So kann ein Datensignal z.B. einem Leistungssignal überlagert werden, beispielsweise mittels einer PLC (Powerline Communication). Die Datenübertragung von der und auf die Haushaltsarbeitsstation erfolgt dann ebenfalls durch eine transformatorische Kopplung.

In einer weiteren Ausgestaltung kann zur Datenübertragung eine eigens dafür vorgesehene Spule verwendet werden, welche z.B. mit einer Spule der Haushaltsarbeitsstation transformatorisch koppelbar ist. Diese dedizierte Spule kann insbesondere in dem gleichen Transformatorkern untergebracht sein wie die zur Leistungsübertragung vorgesehene Empfängerspule.

Die transformatorische Kopplung bedingt eine kurzreichweitige Kopplung oder Nahfeldkopplung, wodurch ein Übersprechen mit anderen Basisstationen unterdrückt wird.

In noch einer weiteren Ausgestaltung kann die drahtlose Datenschnittstelle auch eine Funkschnittstelle sein, z.B. eine Bluetooth- oder eine ZigBEE-Schnittstelle.

Es ist noch eine Ausgestaltung, dass dem Bedienteil ein Identcode zugeordnet ist, welcher z.B. über die drahtlose Datenschnittstelle abfragbar ist. Dadurch kann das Bedienteil von der Haushaltsarbeitsstation erkannt werden. Der Identcode kann insbesondere eine Information über die Funktion oder Eigenschaft des Bedienteils als solchem umfassen, z.B. durch ein entsprechendes Codesegment, und/oder der Identcode kann in einer Nachschlagetabelle o.ä. der Haushaltsarbeitsstation mit der Funktion bzw. Funktionen oder Eigenschaften des Bedienteils verknüpft abgelegt sein. So können z.B. ein Funktionsumfang, Bedieneigenschaften (z.B. eine Displaygröße) und/oder Kommunikationseigenschaften (z.B. nutzbare Kommunikationsraten oder Protokolle) mit der Haushaltsarbeitsstation abgestimmt werden.

Dass die Haushaltsarbeitsstation bedienteilfrei ist, bedeutet insbesondere, dass sie kein von dem aufsetzbaren bzw. abnehmbaren Bedienteil separates, in die Haushaltsarbeitsstation fest integriertes Bedienteil aufweist. Dadurch kann die Haushaltsarbeitsstation, insbesondere deren Arbeitsplatte, besonders kompakt ausgeführt werden. Auch ist die Anordnung der Basisstationen freier wählbar.

Die Aufsatzgeräteerkennung ist dazu vorgesehen, an einer jeweiligen Basisstation einen Aufsatz und eine Art des aufgesetzten Aufsatzgeräts (einschließlich des Bedienteils) zu erkennen. Somit kann die Haushaltsarbeitsstation erkennen, ob ein Bedienteil auf einer Basisstation aufgesetzt ist, und auch auf welcher der Basisstationen.

Beispielsweise können die Basisstationen in ihrem Bereitschaftsmodus, falls noch kein Aufsatzgerät auf ihnen aufgesetzt ist, jeweils in regelmäßigen Abständen oder dauerhaft auf einem Leistungsniveau betrieben werden, welches dazu ausreicht, einem darauf aufgesetzten Aufsatzgerät so viel elektrische Leistung bereitzustellen, dass das Aufsatzgerät über seine Datenschnittstelle eine Eigenschaftsinformation (z.B. Art, maximale Leistungsaufnahme usw.) aussenden kann, insbesondere ebenfalls über eine transformatorische Kopplung.

Die Haushaltsarbeitsstation kann insbesondere dazu eingerichtet sein, das Bedienteil mittels eines dem Bedienteil zugeordneten Identcodes zu erkennen. Der Identcode kann die zum Betrieb des Bedienteils benötigten Eigenschaftsinformationen umfassen, z.B. durch ein entsprechendes Codesegment, und/oder der eindeutig dem Bedienteil oder der Art des Bedienteils zugeordnete Identcode kann in einer Nachschlagetabelle o.ä. der Haushaltsarbeitsstation mit der Funktion bzw. Funktionen oder Eigenschaften des Bedienteils verknüpft abgelegt sein.

Diese Eigenschaftsinformation kann dann von Haushaltsarbeitsstation empfangen und ausgewertet werden. Da die Basisstationen und die zugehörigen Aufsatzgeräte jeweils mittels der nur im Nahfeld wirksamen transformatorischen Kopplung gekoppelt sind, tritt kein Übersprechen auf, und eine an einer Basisstation empfangene Eigenschaftsinformation kann nur von einem Aufsatzgerät stammen, welches auf dieser Basisstation aufgesetzt ist. Der Empfang einer Eigenschaftsinformation an einer Basisstation umfasst somit bei einer transformatorischen Kopplung auch die örtliche Zuordnung des die Eigenschaftsinformation aussendenden Aufsatzgeräts zu dieser Basisstation. Jedoch ist die Datenkommunikation nicht auf eine transformatorische Kopplung beschränkt. Auch kann die Erkennung, ob ein Aufsatzgerät auf einer Basisstation aufgesetzt ist, durch eine Änderung in der Leistungsabgabe dieser Basisstation o.ä. erkannt werden.
Dass die Basisstationen nur bei einem Vorhandensein eines zu seinem Betrieb auf eine der Basisstationen aufgesetzten Bedienteils aktivierbar sind, verhindert zur erhöhten Betriebssicherheit, dass an der Haushaltsarbeitsstation ein Aufsatzgerät ohne eine Bedienmöglichkeit betreibbar ist. In anderen Worten kann die Haushaltsarbeitsstation ohne ein erkanntes Bedienteil die Basisstationen sperren oder deaktivieren (wobei ein Bereitschaftsmodus zugelassen sein kann) und nur bei einem erkannten Bedienteil zum Leistungsbetrieb freigeben.

Es ist eine Ausgestaltung, dass mindestens eine der Basisstationen (ausschließlich) zum Betrieb des Bedienteils vorgesehen und ausgestaltet ist (Bedienteil-Basisstation). Eine solche Bedienteil-Basisstation kann sich insbesondere von den für einen Leistungsbetrieb vorgesehenen Basisstationen (Leistungs-Basisstationen) dadurch unterscheiden, dass sie typischerweise eine nur geringere maximale Leistung bereitstellt oder zu übertragen braucht (z.B. von maximal ca. 100 W, insbesondere von nicht mehr als ca. 50 W), wodurch die Bedienteil-Basisstation einfacher und preiswerter ausgestaltbar ist. Eine Leistungs-Basisstation kann hingegen für eine Leistungsabgabe von z.B. über 1000 W, beispielsweise von bis zu ca. 3700 W, ausgelegt sein.
Es ist eine Ausgestaltung, dass die Haushaltsarbeitsstation dazu eingerichtet ist,
- bei einer Erkennung eines Aufsatzes des Bedienteils auf einer nicht zum Aufsatz des Bedienteils ausgestalteten Basisstation diese Basisstationen für einen Leistungsbetrieb zu sperren oder gesperrt zu halten und
- bei einer Erkennung eines Aufsatzes des Bedienteils auf einer zum Aufsatz des Bedienteils ausgestalteten Basisstation diese Basisstation zum Betrieb des Bedienteils zu aktivieren und die anderen Basisstationen für einen Leistungsbetrieb freizugeben.

Dadurch kann erstens eine Fehlbelegung einer Leistungs-Basisstation mit einem Bedienteil als auch zweitens eine Fehlfunktion des Bedienteils, eine Fehlkommunikation mit dem Bedienteil und/oder eine Beschädigung des Bedienteils verhindert werden. Zudem wird so eine Bediensicherheit verbessert.

Es kann dann besonders vorteilhaft sein, dass der Datenspeicher zur Speicherung der Daten von bis zu 30 s nach einer Entfernung des Bedienteils eingerichtet ist. So wird einerseits genügend Zeit zum Umsetzen des Bedienteils gegeben und andererseits verhindert, dass die Haushaltsarbeitsstation ihren Betrieb ungewollt mit 'alten' Einstellungen aufnimmt.

Es ist noch eine Weiterbildung, dass die Haushaltsarbeitsstation einen Hauptschalter aufweist. Dadurch kann die Haushaltsarbeitsstation unabhängig von dem Bedienteil vom Netz getrennt werden, z.B. in einem Notfall oder um Strom zu sparen. Anstelle oder zusätzlich zu einer galvanischen Trennung der Haushaltsarbeitsstation vom Netz kann der Hauptschalter auch dazu vorgesehen sein, eine Elektronik der Haushaltsarbeitsstation zu aktivieren bzw. deaktivieren. Bei deaktivierter Elektronik ist kein Betrieb einer Basisstation möglich.

Die Aufgabe wird zudem gelöst durch ein Verfahren zum Betreiben des Systems, wobei die Haushaltsarbeitsstation ein Aufsetzen eines Bedienteils auf einer seiner Basisstationen erkennt, z.B. mittels der Aufsatzgeräteerkennung, und bei aufgesetztem Bedienteil die Basisstationen für eine Leistungsübertragung freigibt und bei nicht gesetztem Bedienteil die Basisstationen für eine Leistungsübertragung sperrt.

Es ist eine Weiterbildung, dass die Haushaltsarbeitsstation bei nicht aufgesetztem Bedienteil die Basisstationen ausschaltet oder in einen Bereitschaftsmodus versetzt. Im Umkehrschluss wird eine Leistungsübertragung verhindert.

In den folgenden Figuren wird die Erfindung anhand von Ausführungsbeispielen schematisch genauer beschrieben. Dabei können zur Übersichtlichkeit gleiche oder gleichwirkende Elemente mit gleichen Bezugszeichen versehen sein.
- Fig.1: zeigt in Schrägansicht ein System mit einer erfindungsgemäßen Haushaltsarbeitsstation und einem davon abgenommenen und angewinkelt gezeigten Bedienteil, wobei eine Unterseite des Bedienteils sichtbar ist;
- Fig.2: zeigt in Schrägansicht das System aus Fig.1 mit dem auf eine Basisstation der Haushaltsarbeitsstation aufgesetzten Bedienteil mit einem zusätzlichen aufgesetzten Aufsatzgerät;
- Fig.3: zeigt in Schrägansicht das System aus Fig.1 mit dem auf eine weitere Basisstation der Haushaltsarbeitsstation aufgesetzten Bedienteil und mit zusätzlichen aufgesetzten Aufsatzgeräten;
- Fig.4: zeigt in Schrägansicht ein System mit einer erfindungsgemäßen Haushaltsarbeitsstation und einem davon abgenommenen und angewinkelt gezeigten Bedienteil gemäß einer zweiten Ausführungsform, wobei eine Unterseite des Bedienteils sichtbar ist; und
- Fig.5: zeigt das System aus Fig.4 mit einem aufgesetzten Bedienteil und mit weiteren aufgesetzten Aufsatzgeräten.

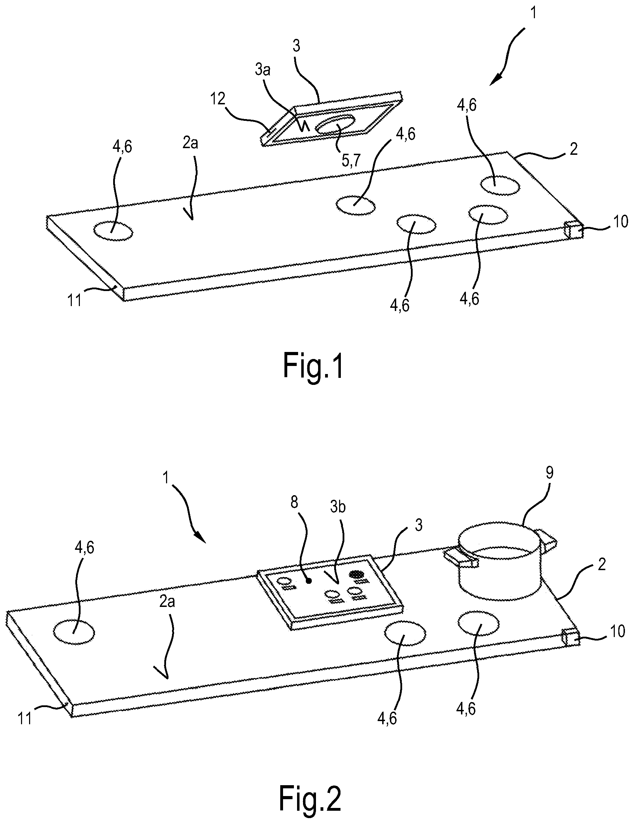

**Fig.1** zeigt ein System 1 aus einer Haushaltsarbeitsstation 2 und einem Bedienteil 3 für die Haushaltsarbeitsstation 2. Die Haushaltsarbeitsstation 2 weist eine Arbeitsplatte 2a mit darin flächenbündig eingelassenen Basisstationen 4 auf. Die Basisstationen 4 sind gleichartig ausgestaltet und weisen insbesondere jeweils eine Transformatorhälfte auf, welche zur Erzeugung eines magnetischen Wechselfelds in einem Nahbereich oberhalb der Basisstation 4 dient. Das Bedienteil 3 weist an seiner Unterseite 3a, mittels welcher es auf die Arbeitsplatte 2a der Haushaltsarbeitsstation 2 aufsetzbar ist, ebenfalls eine Transformatorhälfte 5 auf. Während die Basisstationen 4 bzw. deren Transformatorhälften als primärseitige Transformatorhälften zur Erzeugung des magnetischen Wechselfelds dienen, ist die sekundärseitige Transformatorhälfte 5 des Bedienteils 3 zum Abgriff von Energie aus dem durch die Basisstation 4 erzeugten magnetischen Wechselfeld vorgesehen. Für die Leistungsübertragung wird das Bedienteil 3 auf eine der Basisstationen 4 aufgesetzt, so dass sich zwischen dieser Basisstation 4 und der Transformatorhälfte 5 eine transformatorische Kopplung ergibt. Die an der Transformatorhälfte 5 abgegriffene Induktionsspannung kann zum Betrieb des Bedienteils 3 verwendet werden. Dazu kann der Transformatorhälfte 5 insbesondere ein Gleichrichter nachgeschaltet sein, welcher elektrisch betreibbare Elemente des Bedienteils 3 (z.B. einen berührungsempfindlichen Bildschirm 8, eine Elektronik usw.) mit Gleichspannung versorgen kann.

Für eine Kommunikation zwischen der Haushaltsarbeitsstation 2 und dem Bedienteil 3 ist eine transformatorisch gekoppelte bzw. über zwei Spulen realisierte drahtlose Datenverbindung vorgesehen. Dazu weist die Haushaltsarbeitsstation 2 in jeder der Basisstationen 4 eine Datenübertragungsspule 6 als eine Antenne auf, welche mit einer Datenübertragungsspule 7 in der Transformatorhälfte 5 des Bedienteils 3 koppeln kann. Darüber können beispielsweise Steuerbefehle zum Steuern der Basisstationen 4 von dem Bedienteil 3 an die Haushaltsarbeitsstation 2 übertragen werden, z.B. eine basisstationsspezifische Leistungsstufe. Umgekehrt können aktuelle Daten der Haushaltsarbeitsstation 2, insbesondere seiner Basisstationen 4 und/oder von auf die Basisstationen aufgesetzten Aufsatzgeräten 9 übertragen werden, z.B. ein Vorhandensein eines Aufsatzgeräts 9 auf einer der Basisstationen 4 und/oder aktuelle Leistungseinstellungen an den Basisstationen 4.
Die Haushaltsarbeitsstation 2 weist zudem einen Hauptschalter 11 auf, durch den die Haushaltsarbeitsstation 2 unabhängig von dem Bedienteil 3 vom Netz getrennt werden kann, z.B. in einem Notfall oder um Strom zu sparen.
Wie **Fig.2** zeigt, kann das Bedienteil 3 auf jede beliebige Basisstation 4 aufgesetzt werden. Das Bedienteil 3 weist auf seiner Oberseite 3b den berührungsempfindlich ausgebildeten Bildschirm 8 auf, über welchen eine Nutzerkommunikation ablaufen kann. Der Bildschirm 8 zeigt hier angedeutet die nicht mit dem Bedienteil 3 belegten Basisstationen 4 an, und zwar in der ungefähren Lage wie auf der Arbeitsplatte 2a. Eine belegte Basisstation 4 wird von einer nicht belegten Basisstation 4 unterschiedlich dargestellt. Zumindest an einer belegten Basisstation 4 können, ggf. nutzeränderbare, Zustandsparameter angezeigt werden, wie eine Leistungsstufe (Kochstufe), eine Art des Aufsatzgeräts, ein Garprogrammstatus usw. Das Bedienteil 3 kann aber beispielsweise auch ein Mikrofon (o. Abb.) zur Aufnahme von gesprochenen Nutzerbefehlen aufweisen.

Das Bedienteil 3 kann mittels einer Aufsatzgeräteerkennung von der Haushaltsarbeitsstation 2 erkannt werden. Dazu kann das Bedienteil 3 insbesondere selbsttätig oder auf Anfrage einen Identcode an die Haushaltsarbeitsstation 2 senden, welche daraus das Vorhandensein des Bedienteils 3 erkennt.
Befindet sich das Bedienteil 3 auf einer der Basisstationen 4, kann das Bedienteil 3 wie ein fest in die Haushaltsarbeitsstation 2 integriertes Bedienteil verwendet werden, beispielsweise zur Leistungssteuerung der Basisstationen 4 oder zur Auswahl einer vorbestimmten Programmsteuerung.
Wird das Bedienteil 3 von den Basisstationen 4 abgenommen, werden die Basisstationen 4 deaktiviert, d.h., sie können zumindest nicht in einem Leistungsbetrieb betrieben werden. Das Deaktivieren der Basisstationen 4 kann ein Ausschalten der Basisstationen 4 oder nur ein Deaktivieren des Leistungsbetriebs, aber immer noch einen Aufsatzerkennungsbetrieb, umfassen. Die Haushaltsarbeitsstation 2 weist ferner einen Datenspeicher 10 auf, welcher zur zumindest zeitlich begrenzten oder temporären Speicherung von Daten von auf den Basisstationen 4 aufgesetzten Aufsatzgeräten 9 nach einer Entfernung des Bedienteils eingerichtet ist. Dadurch kann das Bedienteil 3 von einer der Basisstationen 4 auf eine andere der Basisstationen 4 ohne eine Neueinstellung der Basisstationen 4 umgesetzt werden, z.B. innerhalb von 30 s. Wird das Bedienteil 3 für eine längere Zeit von den Basisstationen 4 abgenommen, wird der Inhalt des Datenspeichers 10 gelöscht.
Auch weist das Bedienteil 3 einen Kartenleser 12 zum Einführen einer Speicherkarte auf. Dadurch können beispielsweise Software-Aktualisierungen, Firmware-Aktualisierungen oder zusätzliche Software oder Daten aufgespielt werden.

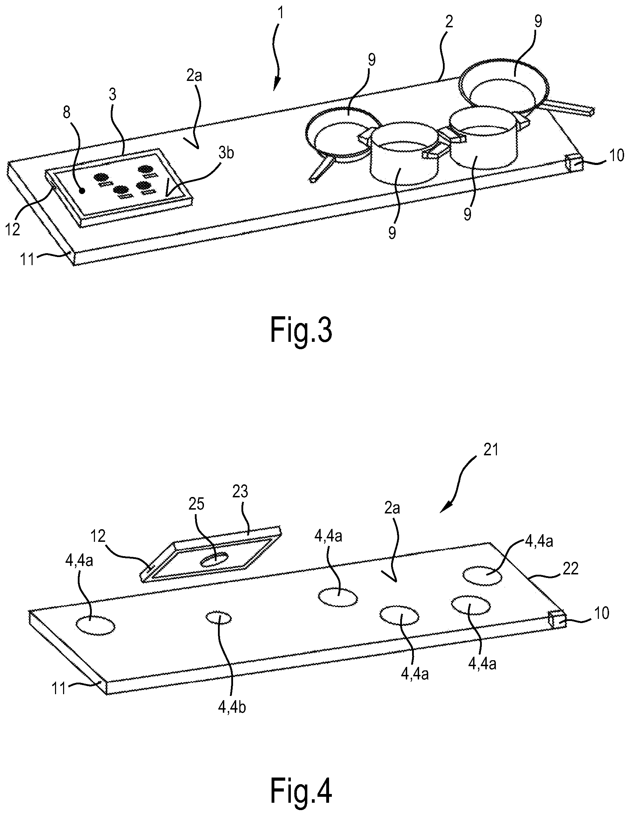

**Fig.3** zeigt in Schrägansicht das System 1 aus Fig.1 mit dem auf eine weitere Basisstation 4 (nun links außen) der Haushaltsarbeitsstation 2 aufgesetzten Bedienteil 3 mit zusätzlichen aufgesetzten Aufsatzgeräten 9. Die Haushaltsarbeitsstation 2 ist nun voll belegt, und zwar zusätzlich zu dem Bedienteil 3 mit vier Aufsatz-Kochgeschirren 9 in Form elektrisch betriebener Töpfe und Pfannen. Diese Konfiguration kann sich beispielsweise aus der Konfiguration aus Fig.2 durch ein Umsetzen beispielsweise des Bedienteils 3 und Aufsetzen der Aufsatz-Kochgeschirre 9 ergeben haben. Auf dem Bildschirm 8 des Bedienteils sind nun alle Basisstationen 4 als belegt dargestellt.

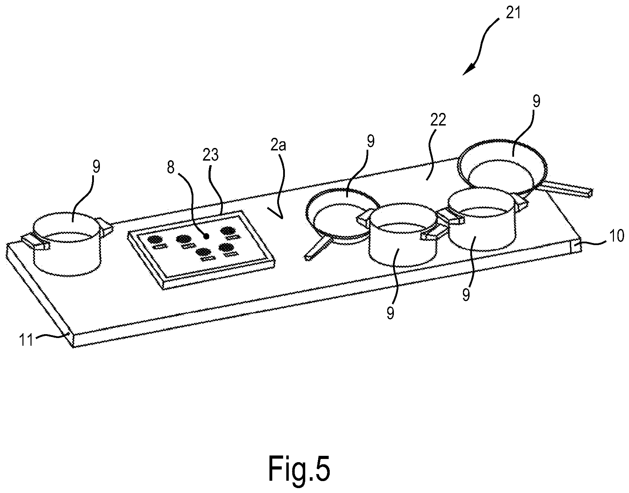

**Fig.4** zeigt in Schrägansicht ein System 21 mit einer Haushaltsarbeitsstation 22 gemäß einer zweiten Ausführungsform und einem davon abgenommenen und angewinkelt gezeigten Bedienteil 23 gemäß einer zweiten Ausführungsform, wobei eine Unterseite 23a des Bedienteils 23 sichtbar ist. Die Haushaltsarbeitsstation 22 ist ähnlich zu der Haushaltsarbeitsstation 2 gemäß der ersten Ausführungsform ausgestaltet, jedoch sind die Basisstationen 4 im Gegensatz dazu nun nicht alle gleichartig aufgebaut. Vielmehr sind weiterhin fünf der Basisstationen 4 als Leistungs-Basisstationen 4a ausgestaltet und eine zusätzliche Basisstation 4 als dedizierte Bedienteil-Basisstation 4b mit einer von den Leistungs-Basisstationen 4a unterschiedlichen Ausgestaltung realisiert. Insbesondere weist die Bedienteil-Basisstation 4b einen kleineren Durchmesser als auch eine geringere maximale Leistungsabgabe auf als die Leistungs-Basisstationen 4a. Dadurch kann die Bedienteil-Basisstation 4b einfacher und preiswerter ausgeführt werden. Zudem kann die Transformatorhälfte 25 des Bedienteils 23 mit einem entsprechend kleineren Durchmesser ausgestaltet werden, und dadurch selbst kompakter ausgelegt werden. **Fig.5** zeigt das System 21 analog zu Fig.3 mit dem Bedienteil 23 auf der Bedienteil-Basisstation 4b und mit weiteren Aufsatzgeräten 9 auf den Leistungs-Basisstationen 4a aufgesetzt.

Selbstverständlich ist die vorliegende Erfindung nicht auf die gezeigten Ausführungsbeispiele beschränkt.

So können mit dem Bedienteil ein nicht berührungsempfindlicher Bildschirm und eine dedizierte Tastatur oder andere Bedienelemente verwendet werden.

### Bezuaszeichenliste

- 1: System
- 2: Haushaltsarbeitsstation
- 2a: Arbeitsplatte
- 3: Bedienteil
- 3a: Unterseite des Bedienteils
- 3b: Oberseite des Bedienteils
- 4: Basisstation
- 4a: Leistungs-Basisstation
- 4b: Bedienteil-Basisstation
- 5: Transformatorhälfte
- 6: Datenübertragungsspule
- 7: Datenschnittstelle
- 8: berührungsempfindlicher Bildschirm
- 9: Aufsatzgerät
- 10: Datenspeicher
- 11: Hauptschalter
- 12: Kartenleser
- 21: System
- 22: Haushaltsarbeitsstation
- 23: Bedienteil
- 23a: Unterseite des Bedienteils
- 25: Transformatorhälfte

## Patentansprüche

1. System (21), aufweisend eine Haushaltsarbeitsstation (22) mit mehreren transformatorisch arbeitenden Basisstationen (4a, 4b) und einem abnehmbaren Bedienteil (23), wobei
- die mehreren transformatorisch arbeitenden Basisstationen (4a, 4b) mindestens eine Leistungs-Basisstation (4a) aufweisen, welche zum Betrieb eines elektrischen Aufsatzküchengeräts (9) vorgesehen und ausgestaltet ist,
**dadurch gekennzeichnet, dass**
- das Bedienteil (23) mindestens eine Anzeigeeinheit (8) und mindestens eine Bedieneinheit (8) für eine Bedienung der Haushaltsarbeitsstation (22) aufweist,
- das Bedienteil (23) mindestens zu seinem Betrieb auf die Haushaltsarbeitsstation (22) aufsetzbar ist und dadurch mit der Haushaltsarbeitsstation (22) transformatorisch koppelbar ist,
- das Bedienteil (23) mindestens eine drahtlose Datenschnittstelle (7) zur Kommunikation mit der Haushaltsarbeitsstation (22) aufweist,
- die Haushaltsarbeitsstation (22) bedienteilfrei ist,
- die Haushaltsarbeitsstation (22) mindestens eine drahtlose Datenschnittstelle (7) zur Kommunikation mit dem abnehmbaren Bedienteil (23) aufweist,
- die Haushaltsarbeitsstation (22) mit einer Aufsatzgeräteerkennung ausgestattet ist,
- die mehreren transformatorisch arbeitenden Basisstationen (4a, 4b) mindestens eine Bedienteil-Basisstation (4b) aufweisen, welche zum Betrieb des aufgesetzten Bedienteils (23) vorgesehen und ausgestaltet ist, die mindestens eine Leistungs-Basisstation (4a, 4b) nur bei einem Vorhandensein des Bedienteils (23) auf einer Bedienteil-Basisstation (4b) aktivierbar ist, und
- die Haushaltsarbeitsstation (22) mindestens einen Datenspeicher (10) aufweist, welcher zur zeitlich begrenzten Speicherung von Daten von auf den Basisstationen (4) aufgesetzten Aufsatzgeräten (9; 23) nach einer Entfernung des Bedienteils (23) eingerichtet ist.

2. System (21) nach Anspruch 1, **dadurch gekennzeichnet, dass** die Haushaltsarbeitsstation (22) dazu eingerichtet ist,
- bei einer Erkennung eines Aufsatzes des Bedienteils (23) auf einer nicht zum Aufsatz des Bedienteils (23) ausgestalteten Leistungs-Basisstation (4a) die Leistungs-Basisstationen (4a) für einen Leistungsbetrieb zu sperren oder gesperrt zu halten und
- bei einer Erkennung eines Aufsatzes des Bedienteils (23) auf einer zum Aufsatz des Bedienteils (23) ausgestalteten Bedienteil-Basisstation (4b) diese Bedienteil-Basisstation (4b) zum Betrieb des Bedienteils (23) zu aktivieren und die Leistungs-Basisstationen (4a) für einen Leistungsbetrieb freizugeben.

3. System (21) nach einem der vorhergehenden Ansprüche , **dadurch gekennzeichnet, dass** der Datenspeicher (10) zur Speicherung der Daten von bis zu 30 s nach einer Entfernung des Bedienteils (23) eingerichtet ist.

4. System (21) nach einem der vorhergehenden Ansprüche, **dadurch gekennzeichnet, dass** die Aufsatzgeräteerkennung dazu eingerichtet ist, das Bedienteil (3) anhand eines dem Bedienteil (3) zugeordneten Identcodes zu erkennen.

5. System (21) nach einem der vorhergehenden Ansprüche, **dadurch gekennzeichnet, dass** die Haushaltsarbeitsstation (22) einen Hauptschalter (11) aufweist.

6. System nach einem der vorhergehenden Ansprüche, **dadurch gekennzeichnet, dass** das Bedienteil (23) mindestens eine weitere Datenschnittstelle (12) aufweist.

7. Verfahren zum Betreiben des Systems (21) nach einem der vorhergehenden Ansprüche, **dadurch gekennzeichnet, dass** die Haushaltsarbeitsstation (22) ein Aufsetzen eines Bedienteils (23) auf einer Bedienteil-Basisstation (4b) erkennt und bei aufgesetztem Bedienteil (23) die Leistungs-Basisstationen (4a) für eine Leistungsübertragung freigibt und bei nicht gesetztem Bedienteil (23) die Leistungs-Basisstationen (4a) für eine Leistungsübertragung sperrt.

8. Verfahren nach Anspruch 7, bei dem die Haushaltsarbeitsstation (22) bei nicht gesetztem Bedienteil (23) die Leistungs-Basisstationen (4a) ausschaltet oder in einen Bereitmodus versetzt sind.

## Claims

1. System (21), having a household workstation (22) with a plurality of base stations (4a, 4b) working on the basis of a transformer and a removable control part (23), wherein
- the plurality of base stations (4a, 4b) working on the basis of a transformer have at least one power base station (4a), which is provided and designed for the operation of an electric add-on kitchen appliance (9),
**characterised in that**
- the control part (23) has at least one display unit (8) and at least one control unit (8) for operating the household workstation (22),
- the control part (23) can be placed on the household workstation (22) at least for the operation thereof and can be coupled to the household workstation (22) on the basis of a transformer as a result,
- the control part (23) has at least one wireless data interface (7) for communicating with the household workstation (22),
- the household workstation (22) is free of control parts,
- the household workstation (22) has at least one wireless data interface (7) for communicating with the removable control part (23),
- the household workstation (22) is equipped with an add-on appliance detector,
- the plurality of base stations (4a, 4b) working on the basis of a transformer have at least one control part base station (4b), which is provided and designed for the operation of the control part (23) placed thereon, the at least one power base station (4a, 4b), is only able to be activated in the presence of the control part (23) on the control part base station (4b), and
- the household workstation (22) has at least one data memory (10), which is configured for the temporally limited storage of data of add-on kitchen appliances (9; 23) placed on the base stations (4) after removing the control part (23).

2. System (21) according to claim 1, **characterised in that** the household workstation (22) is configured,
- when detecting that the control part (23) has been placed on a power base station (4a) on which the control part (23) is not designed to be placed, to block or keep blocked a power operation of the power base stations (4a) and,
- when detecting that the control part (23) has been placed on a control part base station (4b) on which the control part (23) is designed to be placed, to activate this control part base station (4b) for the operation of the control part (23) and to release the power base stations (4a) for power operation.

3. System (21) according to one of the preceding claims, **characterised in that** the data memory (10) is configured to store the data for up to 30 s after removing the control part (23).

4. System (21) according to one of the preceding claims, **characterised in that** the add-on appliance detection is configured to detect the control part (3) on the basis of an identity code assigned to the control part (3).

5. System (21) according to one of the preceding claims, **characterised in that** the household workstation (22) has a main switch (11).

6. System (21) according to one of the preceding claims, **characterised in that** the control part (23) has at least one further data interface (12).

7. Method for operating the system (21) according to one of the preceding claims, **characterised in that** the household workstation (22) detects a control part (23) being placed on a control part base station (4b) and, when the control part (23) has been placed, releases the power base stations (4a) for a power transfer and, when the control part (23) has not been placed, blocks a power transfer of the power base stations (4a).

8. Method according to claim 7, in which the household workstation (22), when the control part (23) has not been placed, switches off the power base stations (4a) or shifts them into a standby mode.

## Revendications

1. Système (21) présentant une station de travail ménager (22) comprenant plusieurs stations de base (4a, 4b) travaillant de manière transformatrice et une partie de commande (23) amovible,
- les plusieurs stations de base (4a, 4b) travaillant de manière transformatrice présentant au moins une station de base de puissance (4a) qui est ménagée et équipée pour le fonctionnement d'un appareil de cuisine à poser (9),
**caractérisé en ce que**
- la partie de commande (23) présente au moins une unité d'affichage (8) et au moins une unité de commande (8) pour une commande de la station de travail ménager (22),
- la partie de commande (23), au moins pour son fonctionnement, peut être posée sur la station de travail ménager (22) et être ainsi couplée à la station de travail ménager (22) de manière transformatrice,
- la partie de commande (23) présente au moins une interface de données (7) sans fil pour la communication avec la station de travail ménager (22),
- la station de travail ménager (22) est exempte de partie de commande,
- la station de travail ménager (22) présente au moins une interface de données (7) sans fil pour la communication avec la partie de commande (23) amovible,
- la station de travail ménager (22) est équipée d'un dispositif d'identification d'appareil à poser,
- les plusieurs stations de base (4a, 4b) travaillant de manière transformatrice présentent au moins une station de base de partie de commande (4b), laquelle est ménagée et équipée pour le fonctionnement de la partie de commande (23) posée, **en ce que** l'au moins une station de base de puissance (4a, 4b) est activable seulement lors d'une présence de la partie de commande (23) sur une station de base de partie de commande (4b), et **en ce que**
- la station de travail ménager (22) présente au moins une mémoire de données (10) qui est configurée pour la mémorisation temporellement limitée de données d'appareils à poser (9 ; 23) posés sur les stations de base (4) après le retrait de la partie de commande (23).

2. Système (21) selon la revendication 1, **caractérisé en ce que** la station de travail ménager (22) est configurée,
- lors d'une identification d'une pose de la partie de commande (23) sur une station de base de puissance (4a) non conçue pour la pose de la partie de commande (23), pour bloquer ou maintenir bloquées les stations de base de puissance (4a) pour un fonctionnement de puissance, et
- lors d'une identification d'une pose de la partie de commande (23) sur une station de base de partie de commande (4b) conçue pour la pose de la partie de commande (23), pour activer cette station de base de partie de commande (4b) pour le fonctionnement de la partie de commande (23) et libérer les stations de base de puissance (4a) pour un fonctionnement de puissance.

3. Système (21) selon l'une quelconque des revendications précédentes, **caractérisé en ce que** la mémoire de données (10) est configurée pour la mémorisation des données jusqu'à 30 s après un retrait de la partie de commande (23).

4. Système (21) selon l'une quelconque des revendications précédentes, **caractérisé en ce que** le dispositif d'identification d'appareil à poser est configuré pour identifier la partie de commande (3) à l'aide d'un code d'identification attribué à la partie de commande (3).

5. Système (21) selon l'une quelconque des revendications précédentes, **caractérisé en ce que** la station de travail ménager (22) présente un interrupteur principal (11).

6. Système (21) selon l'une quelconque des revendications précédentes, **caractérisé en ce que** la partie de commande (23) présente au moins une interface de données (12) supplémentaire.

7. Procédé de fonctionnement du système (21) selon l'une quelconque des revendications précédentes, **caractérisé en ce que** la station de travail ménager (22) identifie une pose d'une partie de commande (23) sur une station de base de partie de commande (4b) et **en ce que**, lorsque la partie de commande (23) est posée, il libère les stations de base de puissance (4a) pour un transfert de puissance et, lorsque la partie de commande (23) n'est pas posée, **en ce qu'**il bloque les stations de base de puissance (4a) pour un transfert de puissance.

8. Procédé selon la revendication 7, dans lequel la station de travail ménager (22), lorsque la partie de commande (23) n'est pas posée, met hors tension les stations de base de puissance (4a) ou les met dans un mode de veille.
